# EUROPEAN PATENT SPECIFICATION

(11) **EP 3 714 389 B1**
(45) Date of publication and mention of the grant of the patent: **02.08.2023**
(21) Application number: 17805151.2
(22) Date of filing: 20.11.2017
(51) Int. Cl.: G06F 21/60, G06F 21/53, G06F 9/46, G06F 9/54

(54) **DEPLOYMENT OF COMPONENTS OF A DISTRIBUTED APPLICATION TO RUNTIME ENVIRONMENTS**
EINSATZ VON KOMPONENTEN EINER VERTEILTEN ANWENDUNG IN LAUFZEITUMGEBUNGEN
DÉPLOIEMENT DE COMPOSANTS D'UNE APPLICATION DISTRIBUÉE DANS DES ENVIRONNEMENTS D'EXÉCUTION

(43) Date of publication of application: 30.09.2020
(73) Proprietor: Telefonaktiebolaget LM Ericsson (PUBL), 164 83 Stockholm (SE)
(72) Inventor: ANGELSMARK, Ola, 271 57 Ystad (SE); PERSSON, Per, 247 34 Södra Sandby (SE); SMEETS, Bernard, 247 51 Dalby (SE); JERKEBY, Christoffer, 135 45 Tyresö (SE)
(74) Representative: Ericsson
(86) International application number: PCT/EP2017/079775
(87) International publication number: WO 2019/096423

(56) References cited:
- US-A- 5 781 633
- US-A1- 2007 094 675
- Anonymous: "Public key fingerprint - Wikipedia", , 19 October 2017 (2017-10-19), XP055496420, Retrieved from the Internet: URL:https://web.archive.org/web/2017101923 1954/https://en.wikipedia.org/wiki/Public_ key_fingerprint [retrieved on 2018-07-31]

## Description

### TECHNICAL FIELD

Embodiments presented herein relate to a method, a runtime environment, a computer program, and a computer program product for deployment of components of a distributed application on destination runtime environments. Embodiments presented herein further relate to a method, a system, a computer program, and a computer program product for facilitating exchange of public key fingerprints between the components.

### BACKGROUND

In communications networks, there could be a challenge to obtain good performance and capacity for a given communications protocol, its parameters and the physical environment in which the communications network is deployed.

A runtime environment can allow application components to be deployed distributed over several devices, where each device comprises a runtime environment. Examples of devices range from network equipment, such as radio access network nodes, core network nodes, service network nodes, to machine-type communication (MTC) devices or Internet-of-Thing (IoT) devices.

In general terms, the components can be regarded as parts of a distributed application that communicate with messages. Each component might have conditions to guide placement of the component on a runtime environment. Runtime environments have attributes that describe the runtime environment functionality as well as other information.

When deploying the components of the distributed application to runtime environments, there are three dominant common practices, or protocols for establishing network security trust among the components.

According to a first example, Pre Shared Key (PSK) Secret(s) for encryption and validation are provided to, and shared among, all the components of the distributed application.

According to a second example, a Certificate Authority (CA) document containing the certificate authority names and keys that authorizes component identities is pre-provisioned to the components.

According to a third example the components trust their peers on first connection and store the key finger print after first use. This practice is commonly referred to as Trust on First Use (TOFU) and might be used to create bootstrap security from factory installed devices.

The above mentioned practices for deploying the components of the distributed application to runtime environments are either tied to one single network domain or make naive assumptions when establishing the network security trust.

The shared keys allow any holder of the shared keys to manipulate data from any other member (in the present case: component) of the network.

Further, TOFU in itself depends on trusting the network on the first connection between two components. Deployment based on TOFU only protocols are thus prone to man in the middle attacks on the first connection.

CA only protocols create networks that are prone to attacks where one CA is compromised by an attacker and where the compromised CA starts signing overlapping or false certificates.

PSK based protocols tend to be promiscuous and non-distinguishing between identities as all components share the same secrets. Therefore, networks built on PSK based protocols cannot defend themselves from inside attacks.

US 5 781 633 A discloses a system providing capability security for distributed object systems. The basic tenet of capability security is that the right to do something to an object (e.g., invoke a particular object's methods) is represented solely by the holding of a reference to that object. In each of the preferred embodiments described herein, an object is presumed to hold legitimately a reference to a particular object only if the object knows some unpublicized (except under the conditions required by capability security) key associated with the particular object. That is, an object's key is required along with the object's reference. So that capability security is preserved when object references are passed between objects in different processes, the object references being passed are encrypted upon transmission and then decrypted upon arrival at their intended destination. This cryptography can be performed by objects or processes using a variety of techniques, including Diffie-Helman or public/private key cryptography. The cryptography performed in the various embodiments ensures that only the intended recipient of the message can decode the object reference and that a misbehaving object cannot convince another object that it possesses a capability it does not have. Some of the disclosed embodiments provide capability security for transparent distributed object systems, wherein a pair of matched transports handle and encrypt inter-process communications between objects in their respective processes.

Hence, there is still a need for improved mechanisms for establishing network security trust among components when deploying the components of a distributed application to runtime environments.

### SUMMARY

An object of embodiments herein is to provide efficient deployment of components of a distributed application to runtime environments.

According to a first aspect there is presented a method for deployment of components of a distributed application on destination runtime environments. The method is performed by a source runtime environment. The method comprises providing, with the components residing on the source runtime environment, public key fingerprints between the components, such that each component has its own public key and its own private key and is provided with a public key fingerprint of at least one other of the components. The method comprises providing migrating each of the components from the source runtime environment to its destination runtime environment for deployment of each component on its destination runtime environment.

According to a second aspect there is presented a runtime environment for deployment of components of a distributed application on destination runtime environments. The runtime environment comprises processing circuitry. The processing circuitry is configured to cause the runtime environment to provide, with the components residing on the runtime environment, public key fingerprints between the components, such that each component has its own public key and its own private key and is provided with a public key fingerprint of at least one other of the components. The processing circuitry is configured to cause the runtime environment to migrate each of the components from the runtime environment to its destination runtime environment for deployment of each component on its destination runtime environment.

According to a third aspect there is presented a runtime environment for deployment of components of a distributed application on destination runtime environments. The runtime environment comprises a provide module configured to provide, with the components residing on the runtime environment, public key fingerprints between the components, such that each component has its own public key and its own private key and is provided with a public key fingerprint of at least one other of the components. The runtime environment comprises a migrate module configured to migrate each of the components from the runtime environment to its destination runtime environment for deployment of each component on its destination runtime environment.

According to a fourth aspect there is presented a computer program for deployment of components of a distributed application on destination runtime environments, the computer program comprising computer program code which, when run on processing circuitry of a runtime environment, causes the runtime environment to perform a method according to the first aspect.

According to a fifth aspect there is presented a method for facilitating exchange of public key fingerprints between components of a distributed application, each component having its own public key and its own private key. The method is performed by one of the components. The method comprises obtaining, when being in the same trusted network environment as the other components, a public key fingerprint of at least one of the other components before being migrated to a destination runtime environment for deployment of the component on the destination runtime environment.

According to a sixth aspect there is presented a system for facilitating exchange of public key fingerprints between components of a distributed application, each component having its own public key and its own private key. The system comprises processing circuitry. The processing circuitry is configured to cause one of the components to obtain, when the component is in the same trusted network environment as the other components, a public key fingerprint of at least one of the other components before being migrated to a destination runtime environment for deployment of the component on the destination runtime environment.

According to a seventh aspect there is presented a system for facilitating exchange of public key fingerprints between components of a distributed application, each component having its own public key and its own private key. The system comprises an obtain module configured to cause one of the components to obtain, when the component is in the same trusted network environment as the other components, a public key fingerprint of at least one of the other components before being migrated to a destination runtime environment for deployment of the component on the destination runtime environment.

According to an embodiment the system according to the sixth aspect and/or the sevenths aspect is part of the runtime environment according to the second aspect and/or the third aspect.

According to an eight aspect there is presented a computer program for facilitating exchange of public key fingerprints between components of a distributed application, the computer program comprising computer program code which, when run on processing circuitry of a system, causes one of the components to obtain, when the component is in the same trusted network environment as the other components, a public key fingerprint of at least one of the other components before being migrated to a destination runtime environment for deployment of the component on the destination runtime environment.

According to a ninth aspect there is presented a computer program product comprising a computer program according to at least one of the fourth aspect and the eight aspect and a computer readable storage medium on which the computer program is stored. The computer readable storage medium could be a non-transitory computer readable storage medium.

Advantageously these methods, these runtime environments, these systems, and these computer programs provide efficient deployment of the components of the distributed application to the destination runtime environments.

Advantageously these methods, these runtime environments, these systems, and these computer programs establish network security trust among the components in an efficient manner when deploying the components of the distributed application to the destination runtime environments.

Advantageously these methods, these runtime environments, these systems, and these computer programs combine the strengths for CA, PSK and TOFU based protocols without attaching its weaknesses.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2 and 3 are flowcharts of methods according to embodiments;
Fig. 4 is a schematic illustration of runtime environments according to an embodiment;
Fig. 5 is a schematic diagram showing functional units of a runtime environment according to an embodiment;
Fig. 6 is a schematic diagram showing functional modules of a runtime environment according to an embodiment;
Fig. 7 is a schematic diagram showing functional units of a system according to an embodiment;
Fig. 8 is a schematic diagram showing functional modules of a system according to an embodiment; and
Fig. 9 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

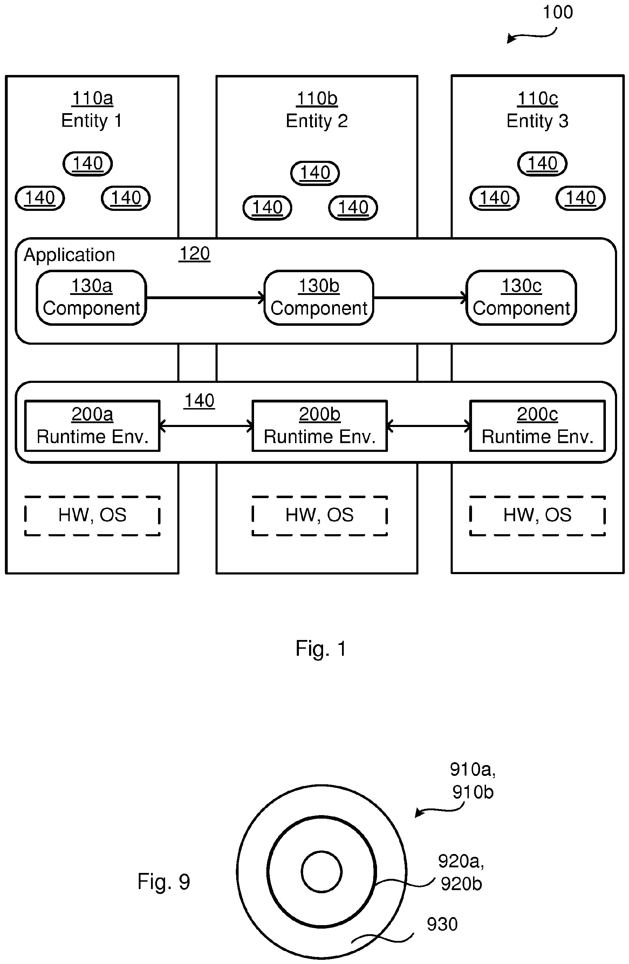

Fig. 1 schematically illustrates a communications network 100. The communications network 100 comprises three entities (Entity 1, Entity 2, Entity 3) 110a, 110b, 110c, representing any combination of devices, compute nodes, and storage nodes. Each entity 110a, 110b, 110c may have its own hardware (HW) and may have its own operating system (OS). Alternatively, hardware and/or operating system is shared among at least two of the entities 110a, 110b, 110c.

The entities 110a, 110b, 110c host at least one application 120 distributed among the entities 110a, 110b, 110c. The application 120 is transparently distributed across the communications network 100 and comprises components 130a, 130b, 130c. In some aspects the components 130a, 130b, 130c are actors. The components 130a, 130b, 130c may access a resource object 140 by means of at least one of the runtime environments 200a, 200b, 200c. Each resource object 160 could be a file system, a sensor, an actuator, a network interface, etc., that access is provided to by the runtime environments 200a, 200b, 200C

The communications network 100 further comprises a distributed execution environment 140 formed by a set of networks of runtime environments 200a, 200b, 200c, seen by the application 120 as a single platform. There is not a one-to-one mapping between components 130a, 130b, 130c and entities 110a, 110b, 110c although it is hereinafter assumed for simplicity that one component 130a, 130b, 130c is run on each runtime environment 200a, 200b, 200C.

Issues with common practices for deploying the components 130a, 130b, 130c of the distributed application 120 to its runtime environment 200a, 200b, 200c have been disclosed above. The herein disclosed embodiments address these issues by being related to mechanisms for deployment of components 130a, 130b, 130c of a distributed application 120 on destination runtime environments 200b, 200c and facilitating exchange of public key fingerprints between the components 130a, 130b, 130c. In order to obtain such mechanisms there is provided a runtime environment 200a, a method performed by the runtime environment 200a, a computer program product comprising code, for example in the form of a computer program, that when run on processing circuitry of the runtime environment 200a, causes the runtime environment 200a to perform the method. In order to obtain such mechanisms there is further provided a system 300, a method performed by the system 300, and a computer program product comprising code, for example in the form of a computer program, that when run on processing circuitry of the system 300, causes one of the components 130a, 130b, 130v to perform the method.

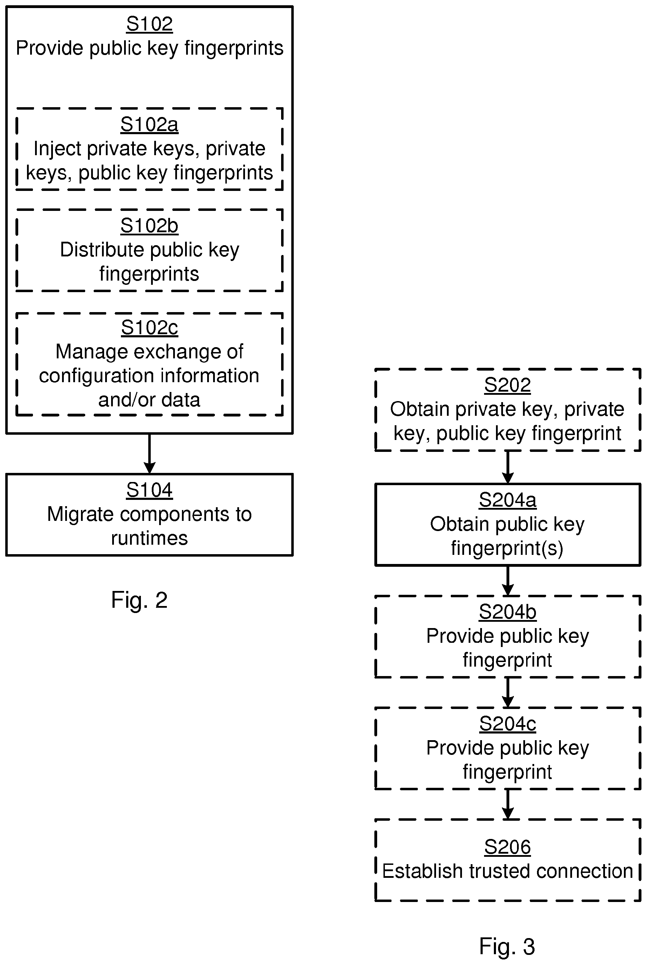

Reference is now made to Fig. 2 illustrating a method for deployment of components 130a, 130b, 130c of a distributed application 120 on runtime environments 200b, 200c hereinafter denoted destination runtime environments 200b, 200c. The method is performed by the runtime environment 200a. The runtime environment 200a will hereinafter be denoted a source runtime environment 200a so as to logically separate runtime environment 200a from runtime environments 200b, 200C.

When deploying components 130a, 130b, 130c of a distributed application 120, all components 130a, 130b, 130c are initially deployed to the same, trusted, runtime environment, i.e. the source runtime environment 200a. Here, the components 130a, 130b, 130c might exchange keys, sensitive data, etc., as necessary. Particularly, the source runtime environment 200a is configured to perform step S102:
S102: The source runtime environment 200a provides, with the components 130a, 130b, 130c residing on the source runtime environment 200a, public key fingerprints between the components 130a, 130b, 130c. Each component 130a, 130b, 130c has its own public key and its own private key and is provided with a public key fingerprint of at least one other of the components 130a, 130b, 130c.

The components 130a, 130b, 130c might then be migrated to their respective places, with the secrets in their internal state. Particularly, the source runtime environment 200a is configured to perform step S104:
S104: The source runtime environment 200a migrates each of the components 130a, 130b, 130c from the source runtime environment 200a to its destination runtime environment 200b, 200c for deployment of each component 130a, 130b, 130c on its destination runtime environment 200b, 200c.

Once the components 130a, 130b, 130c have reached their final destination i.e. its respective destination runtime environment 200b, 200c, the components 130a, 130b, 130c resume operation, using the exchanged information. It is noted that it is possible that, at a later stage, one or more of the components 130a, 130b, 130c are migrated from the destination runtime environments 200b, 200c they were migrated to in step S104 to respective other destination runtime environments.

All components 130a, 130b, 130c are thus first deployed to the same source runtime environment 200a, where they are provided with public key fingerprints. The components 130a, 130b, 130c are then migrated to their destination runtime environments 200b, 200c, bringing the keys and fingerprints with them.

As disclosed above, the proposed method combines the strengths for CA, PSK and TOFU based protocols without attaching its weaknesses. In more detail, the pre-distribution of public key fingerprints on multiple components (as in step S102) give the possibility of only allowing connections between intended endpoints in a distributed environment. While PSK based protocols lack granularity, the proposed method specifically distributes the public key fingerprints to components 130a, 130b, 130c intended to communicate with each other. While CA based protocols provide dynamic assignments of new certificates for alteration of a network, the proposed method provides a static security where a compromised CA cannot interrupt communication or insert false components in the network during its execution. As the public key fingerprint identifying each endpoint of this network of components are predistributed in a trusted environment, any initial exchange of keys, fingerprints, configurations and secrets between the components 130a, 130b, 130c does not cause vulnerability to man in the middle attacks.

Embodiments relating to further details of deployment of components 130a, 130b, 130c of a distributed application 120 on destination runtime environments 200b, 200c as performed by the runtime environment 200a will now be disclosed.

There could be different ways for the private keys, the public keys, and the public key fingerprints to be generated.

In some aspects, the keys and fingerprints are generated outside the components 130a, 130b, 130c and injected into the components 130a, 130b, 130c by the source runtime environment 200a. Particularly, according to an embodiment the private keys, the public keys, and the public key fingerprints are generated outside the components 130a, 130b, 130c, and the source runtime environment 200a is configured to perform (optional) step S102a:
S102a: The source runtime environment 200a injects the private keys, the public keys, and the public key fingerprints into the components 130a, 130b, 130c.

Step S102a is in some aspects performed as part of step S102.

There could be different points in time the lifespan of the components 130a, 130b, 130c as to when the private keys, the public keys, and the public key fingerprints are injected into the components 130a, 130b, 130c. In some aspects the private keys, the public keys, and the public key fingerprints are injected into the components 130a, 130b, 130c as part of compilation of the distributed application 120 and/or the components 130a, 130b, 130c themselves. In other aspects the public keys, and the public key fingerprints are injected into the components 130a, 130b, 130c after such compilation.

When the keys and fingerprints are generated outside the components 130a, 130b, 130c, the keys and fingerprints might be generated by the source runtime environment 200a itself or outside the source runtime environment 200a. That is, according to an embodiment the private keys, the public keys, and the public key fingerprints are generated either by the source runtime environment 200a or outside the source runtime environment 200a and obtained by the source runtime environment 200a.

In some aspects, the keys and fingerprints are generated by the components 130a, 130b, 130c themselves and distributed by the source runtime environment 200a. Particularly, according to an embodiment the private keys, the public keys, and the public key fingerprints are generated by the components 130a, 130b, 130c, and the source runtime environment 200a is configured to perform (optional) step S102b:
S102b: The source runtime environment 200a distributes the public key fingerprint of each of the components 130a, 130b, 130c to at least one other of the components 130a, 130b, 130c.

Step S102b is in some aspects performed as part of step S102.

In some aspects, the components 130a, 130b, 130c are to, according to the application 120, communicate with each other over connection paths. In some aspects the source runtime environment 200a therefore identifies all connection paths between the components 130a, 130b, 130c for the given application 120. Particularly, according to an embodiment the components 130a, 130b, 130c are configured (e.g. by the application 120) to communicate with each other according to at least one connection path, where the at least one connection path defines a network topology.

For each connection path the source and destination public key fingerprints might then be provisioned, by means of the source runtime environment 200a, from the source component 130a, 130b, 130c to the destination component 130a, 130b, 130c and vice versa. Particularly, according to an embodiment the public key fingerprints are distributed in accordance with the network topology such that there are two public key fingerprints per connection path.

The components 130a, 130b, 130c might, by means of the source runtime environment 200a, be equipped with the key fingerprint of all intended connections. Particularly, according to an embodiment the public key fingerprints are distributed such that there is one public key fingerprint at each end of each connection path, with each public key fingerprint of the component 130a, 130b, 130c at one end of a given connection path corresponding to the public key of the component 130a, 130b, 130c at the opposite end of the given connection path.

In some aspects, the public keys are signed before the components 130a, 130b, 130c are migrated. Particularly, according to an embodiment each of the public keys is signed by a trusted agent before each of the components 130a, 130b, 130c is migrated to its destination runtime environment 200b, 200c. Non-limiting examples of trust agents include, but are not limited to, certificate authorities (CAs), block chains, etc.

In some aspects, the components 130a, 130b, 130c exchange configurations, and/or secrets while residing on the source runtime environment 200a. Therefore, according to an embodiment the source runtime environment 200a is configured to perform (optional) step S102c:
S102c: The source runtime environment 200a manages, with the components 130a, 130b, 130c residing on the source runtime environment 200a, exchange of at least one of configuration information and data between the components 130a, 130b, 130c.

Step S102c is in some aspects performed as part of step S102.

In some aspects, the procedure of provisioning public key fingerprints to the components 130a, 130b, 130c is repeated.

There could be different ways to repeat the provisioning public key fingerprints to the components 130a, 130b, 130c.

In some aspects, the procedure is repeated for the same fingerprints. Particularly, according to an embodiment each of the components 130a, 130b, 130c is re-migrated back to the source runtime environment 200a for re-provisioning of the public key fingerprints before being migrated to a set of destination runtime environments (200b, 200c).

In some aspects, the procedure is repeated for new fingerprints. Particularly, according to an embodiment each of the components 130a, 130b, 130c is re-migrated back to the source runtime environment 200a for provisioning of new public key fingerprints before being migrated to a set of destination runtime environments 200b, 200c.

In this respect, all or some of the components 130a, 130b, 130c might be migrated back to the same destination runtime environments 200b, 200c as they were migrated to in step S104. Further, all or some of the components 130a, 130b, 130c might be migrated to different destination runtime environments 200b, 200c than those they were migrated to in step S104.

In some aspects the procedure is repeated periodically. Particularly, according to an embodiment each of the components 130a, 130b, 130c is periodically re-migrated back to the source runtime environment 200a.

In some aspects, the procedure is repeated upon need. That is, in some aspects an event issued by one of the components 130a, 130b, 130c triggers the components 130a, 130b, 130c to be re-migrated back to the source runtime environment 200a.

Reference is now made to Fig. 3 illustrating a method for facilitating exchange of public key fingerprints between components 130a, 130b, 130c of a distributed application 120. Each component 130a, 130b, 130c has its own public key and its own private key. In some aspects, the system 300 is configured to cause one of the components 130a to perform the method.

S204a: The component 130a obtains, when being in the same trusted network environment as the other components 130b, 130c, a public key fingerprint of at least one of the other components 130b, 130c before being migrated to a destination runtime environment 200b, 200c for deployment of the component 130a on the destination runtime environment 200b, 200c.

Embodiments relating to further details of facilitating exchange of public key fingerprints between components 130a, 130b, 130c of a distributed application 120 will now be disclosed.

As disclosed above, there could be different ways for the private keys, the public keys, and the public key fingerprints to be generated.

As further disclosed above, in some aspects, the keys and fingerprints are generated outside the components 130a, 130b, 130c and injected into the components 130a, 130b, 130c by the source runtime environment 200a (acting as trusted network environment). Particularly, according to an embodiment the system 300 is configured to cause the component 130a to perform (optional) step S202:
S202: The component 130a obtains the private key, the public key, and the public key fingerprint from the trusted network environment.

As further disclosed above, in some aspects, the keys and fingerprints are generated by the components 130a, 130b, 130c themselves and distributed by the source runtime environment 200a (acting as trusted network environment). Particularly, according to an embodiment the system 300 is configured to cause the component 130a to perform (optional) step S204c:
S204c: The component 130a provides at least the public key fingerprint to the trusted network environment for distribution to at least one other of the components 130b, 130c.

In some aspects, the component 130a provides its own public key fingerprint to at least one of the other components 130b, 130c.Particularly, according to an embodiment the system 300 is configured to cause the component 130a to perform (optional) step S204b:
S204b: The component 130a provides, when being in the same trusted network environment as the other components 130b, 130c, the public key fingerprint of the components 130a to the at least one of the other components 130b, 130c before being migrated to the destination runtime environment 200b, 200C.

There could be different examples of trusted network environments. According to an embodiment the trusted network environment is the source runtime environment 200a. According to another embodiment the trusted network environment consists of a subset of runtime environments that are securely linked together through secure communication channels using Transport Layer Security (TLS), Internet Protocol security (IPsec) or other secure communication protocols.

The component 130a, 130b, 130c might, as part of establishing trusted endpoint connections, verify the public key fingerprints. Thus, in some aspects, the public key fingerprint is used by the component 130a when establishing a trusted connection to another component 130b, 130c. Particularly, according to an embodiment the system 300 is configured to cause the component 130a to perform (optional) step S206 when the component 130a is deployed on its destination runtime environment 200b, 200c:
S206: The component 130a establishes a trusted connection to at least one of the other components 130b, 130c by receiving the public key of each of the at least one of the other components 130b, 130c and verifying the received public key to its corresponding public key fingerprint.

It is here thus implicitly assumed that the component 130a has obtained, as in step S202a, the public key fingerprint of each component 130b, 130c the trusted connection is to be established to.

As disclosed above, in some aspects, the procedure of provisioning public key fingerprints to the components 130a, 130b, 130c is repeated.

There could be different ways to repeat the provisioning public key fingerprints to the components 130a, 130b, 130c
In some aspects, the procedure is repeated for the same public key fingerprint and the same trusted network environment. Particularly, according to an embodiment the component 130a is re-migrated back to the trusted network environment for again obtaining the public key fingerprint of the at least one of the other components 130b, 130c before being migrated to a destination runtime environment 200b, 200C.

In some aspects, the procedure is repeated for a new public key fingerprint and the same trusted network environment. Particularly, according to an embodiment the component 130a is re-migrated back to the trusted network environment for obtaining a new public key fingerprint of the at least one of the other components 130b, 130c before being migrated to a destination runtime environment 200b, 200C.

In some aspects, the procedure is repeated for the same public key fingerprint and another trusted network environment. Particularly, according to an embodiment the component 130a is migrated to another trusted network environment for again obtaining the public key fingerprint of the at least one of the other components 130b, 130c before being migrated to a destination runtime environment 200b, 200C.

In some aspects the procedure is repeated for a new public key fingerprint and another trusted network environment. Particularly, according to an embodiment the component 130a is migrated to another trusted network environment for obtaining a new public key fingerprint of the at least one of the other components 130b, 130c before being migrated to a destination runtime environment 200b, 200C.

In this respect the component 130a might be migrated back to the same destination runtime environment 200b, 200c as it was initially migrated to. Alternatively, the components 130a might be migrated to a different destination runtime environment 200b, 200c than that it was initially migrated to.

Although the above embodiments have, for illustrative purposes, differentiated between source runtime environment 200a and destination runtime environment 200b, 200c, each of the runtime environments 200a, 200b, 200b might simultaneously act as both a source runtime environment and destination runtime environment and one of the components might thus be migrated from a given runtime environment to the same given runtime environment. In other words, in some aspects, one of the components stays on one of the runtime environments. The term migrated should thus be interpreted broadly in this respect. In other words, the destination runtime environment 200b, 200c for one of the components could be identical to the source runtime environment 200a for that component.

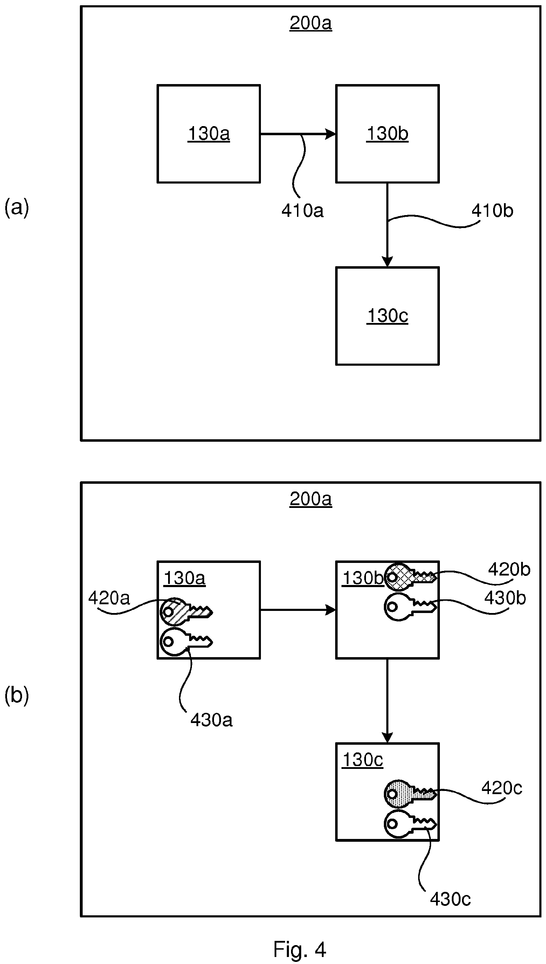

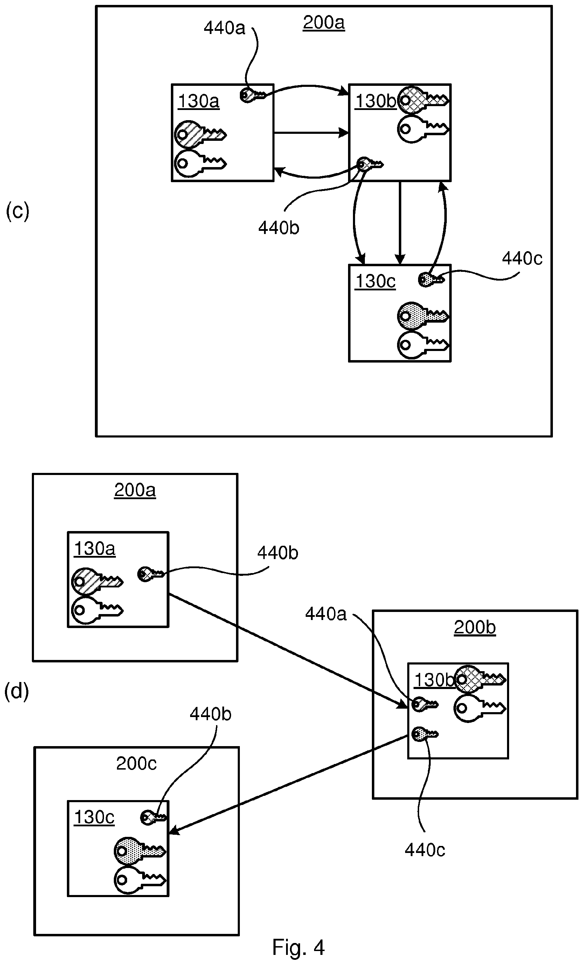

One particular embodiment for deployment of components 130a, 130b, 130c of a distributed application 120 on destination runtime environments 200b, 200c based on at least some of the above disclosed embodiments will now be disclosed in detail with reference to Fig. 4.

As in Fig. 4(a), all components 130a, 130b, 130c are initially deployed to the same, trusted, source runtime environment 200a. The source runtime environment 200a identifies all known connection paths 410a, 410b for the given distributed application 120 between all the components 130a, 130b, 130c. In the illustrative example of Fig. 4(a) there is one connection path 410a from component 130a to component 130b, and one connection path 410b from component 130b to component 130c.

As in Fig. 4(b), for each component 130a, 130b, 130c, a public key 420a, 420b, 420c and private key 430a, 430b, 430c is generated and provided to the respective component 130a, 130b, 130c.Examples of where the keys might be generated have been provided above. As disclosed above, the public keys might be signed by a trusted agent.

As in Fig. 4(c), the components 130a, 130b, 130c, by means of the source runtime environment 200a, exchange keys, fingerprints, configurations and secrets for each connection path. Particularly, with respect to the connection paths 410a, 410b, the public key fingerprints 440a, 440b, 440c are provisioned from the source components to the destination components and vice versa. In the illustrative example of Fig. 4(c) the public key fingerprint 440a of component 130a is provided to component 130b, the public key fingerprint 440b of component 130b is provided to components 130a and 130b, and the public key fingerprint 440c of component 130c is provided to component 130b, see also Fig. 4(d). The components 130a, 130b, 130c are thereby equipped with the key fingerprints of all intended connections. This will allow the component 130a, 130b, 130c to verify its connections without using a trusted agent and thus can be established beyond one single trusted network domain.

As in Fig. 4(d), the components 130b, 130c are migrated to their destination runtime environment 200b, 200c, bringing the keys and fingerprints with them. A component 130a, 130b, 130b can now reside inside or outside of the trusted network domain and establish trusted connections to its endpoints (i.e., other components 130a, 130b, 130c) by verifying the fingerprints.

In summary, the herein disclosed embodiments might be regarded as combining a certificate authority methodology with a Trust On First Use methodology in a single entity (i.e. the trusted network environment; the source runtime environment 200a) before the components 130a, 130b, 130c are migrated. Cryptographic fingerprints (i.e. the public key fingerprints) are stored in components 130a, 130b, 130c based on intended communication patterns of the components 130a, 130b, 130c in a distributed application 120.

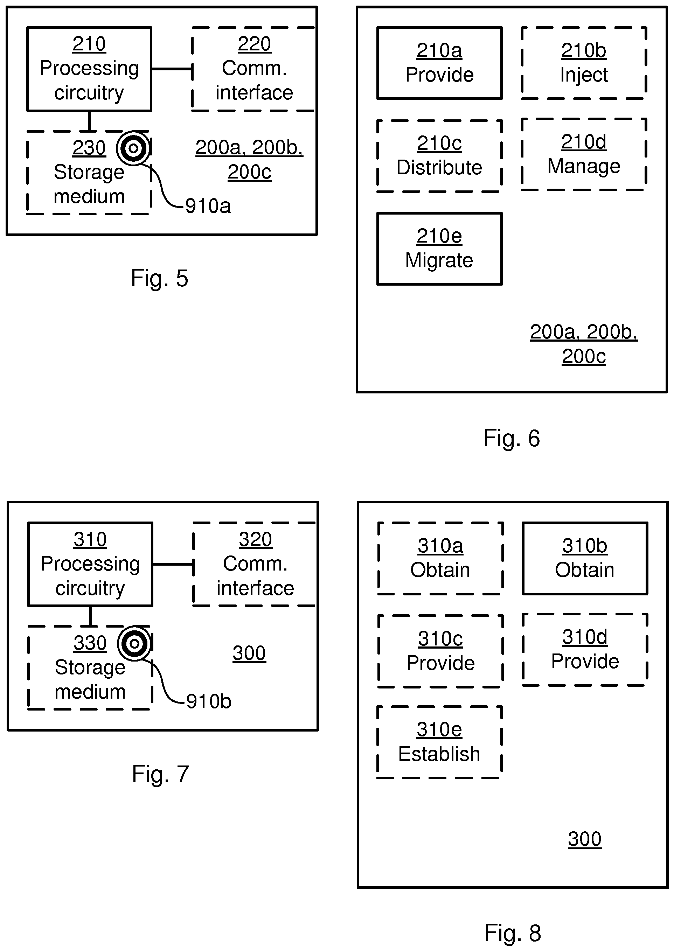

Fig. 5 schematically illustrates, in terms of a number of functional units, the components of a runtime environment 200a according to an embodiment. Processing circuitry 210 is provided using any combination of one or more of a suitable central processing unit (CPU), multiprocessor, microcontroller, digital signal processor (DSP), etc., capable of executing software instructions stored in a computer program product 910a (as in Fig. 9), e.g. in the form of a storage medium 230. The processing circuitry 210 may further be provided as at least one application specific integrated circuit (ASIC), or field programmable gate array (FPGA).

Particularly, the processing circuitry 210 is configured to cause the runtime environment 200a to perform a set of operations, or steps, S102-S104, as disclosed above. For example, the storage medium 230 may store the set of operations, and the processing circuitry 210 may be configured to retrieve the set of operations from the storage medium 230 to cause the runtime environment 200a to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The runtime environment 200a may further comprise a communications interface 220 for communications with other runtime environments 200b, 200c as well as other components, applications, entities, functions, nodes, and devices of the communications network 100. As such the communications interface 220 may comprise one or more transmitters and receivers, comprising analogue and digital components.

The processing circuitry 210 controls the general operation of the runtime environment 200a e.g. by sending data and control signals to the communications interface 220 and the storage medium 230, by receiving data and reports from the communications interface 220, and by retrieving data and instructions from the storage medium 230. Other components, as well as the related functionality, of the runtime environment 200a are omitted in order not to obscure the concepts presented herein.

Fig. 6 schematically illustrates, in terms of a number of functional modules, the components of a runtime environment 200a according to an embodiment. The runtime environment 200a of Fig. 6 comprises a number of functional modules; a provide module 210a configured to perform step S102 and a migrate module 210e configured to perform step S104. The runtime environment 200a of Fig. 6 may further comprise a number of optional functional modules, such as any of an inject module 210b configured to perform step S102a, a distribute module 210c configured to perform step S102b, and a manage module 210d configured to perform step S102c. In general terms, each functional module 210a-210e may be implemented in hardware or in software. Preferably, one or more or all functional modules 210a-210e may be implemented by the processing circuitry 210, possibly in cooperation with the communications interface 220 and/or the storage medium 230. The processing circuitry 210 may thus be arranged to from the storage medium 230 fetch instructions as provided by a functional module 210a-210e and to execute these instructions, thereby performing any steps of the runtime environment 200a as disclosed herein.

The runtime environment 200a may be provided as a standalone device or as a part of at least one further device. Alternatively, functionality of the runtime environment 200a may be distributed between at least two devices, or nodes. Thus, a first portion of the instructions performed by the runtime environment 200a may be executed in a first device, and a second portion of the of the instructions performed by the runtime environment 200a may be executed in a second device; the herein disclosed embodiments are not limited to any particular number of devices on which the instructions performed by the runtime environment 200a may be executed. Hence, the methods according to the herein disclosed embodiments are suitable to be performed by a runtime environment 200a residing in a cloud computational environment. Therefore, although a single processing circuitry 210 is illustrated in Fig. 5 the processing circuitry 210 may be distributed among a plurality of devices, or nodes. The same applies to the functional modules 210a-210e of Fig. 6 and the computer program 920a of Fig. 9 (see below).

Fig. 7 schematically illustrates, in terms of a number of functional units, the components of a system 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 910b (as in Fig. 9), e.g. in the form of a storage medium 330. The processing circuitry 310 may further be provided as at least one application specific integrated circuit (ASIC), or field programmable gate array (FPGA).

Particularly, the processing circuitry 310 is configured to cause one of the components 130a to perform a set of operations, or steps, S202-S206, as disclosed above. For example, the storage medium 330 may store the set of operations, and the processing circuitry 310 may be configured to retrieve the set of operations from the storage medium 330 to cause one of the components 130a to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The system 300 may further comprise a communications interface 320 for communications with components, runtime environments 200a, 200b, 200c, applications, entities, functions, nodes, and devices of the communications network 100. As such the communications interface 320 may comprise one or more transmitters and receivers, comprising analogue and digital components.

The processing circuitry 310 controls the general operation of the system 300 e.g. by sending data and control signals to the communications interface 320 and the storage medium 330, by receiving data and reports from the communications interface 320, and by retrieving data and instructions from the storage medium 330. Other components, as well as the related functionality, of the system 300 are omitted in order not to obscure the concepts presented herein.

Fig. 8 schematically illustrates, in terms of a number of functional modules, the components of a system 300 according to an embodiment. The system 300 of Fig. 8 comprises an obtain module 310b configured to perform step S204a. The system 300 of Fig. 8 may further comprise a number of optional functional modules, such as any of an obtain module 310a configured to perform step S202, a provide module 310c configured to perform step S204b, a provide module 310d configured to perform step S204c, and an establish module 310e configured to perform step S206. In general terms, each functional module 310a-310e may be implemented in hardware or in software. Preferably, one or more or all functional modules 310a-310e may be implemented by the processing circuitry 310, possibly in cooperation with the communications interface 320 and/or the storage medium 330. The processing circuitry 310 may thus be arranged to from the storage medium 330 fetch instructions as provided by a functional module 310a-310e and to execute these instructions, thereby performing any steps of the component 130a as disclosed herein.

In some aspects the system 300 is part of the runtime environment 200a.

Fig. 9 shows one example of a computer program product 910a, 910b comprising computer readable means 930. On this computer readable means 930, a computer program 920a can be stored, which computer program 920a can cause the processing circuitry 210 and thereto operatively coupled entities and devices, such as the communications interface 220 and the storage medium 230, to execute methods according to embodiments described herein. The computer program 920a and/or computer program product 910a may thus provide means for performing any steps of the runtime environment 200a as herein disclosed. On this computer readable means 930, a computer program 920b can be stored, which computer program 920b can cause the processing circuitry 310 and thereto operatively coupled entities and devices, such as the communications interface 320 and the storage medium 330, to execute methods according to embodiments described herein. The computer program 920b and/or computer program product 910b may thus provide means for performing any steps of the system 300 as herein disclosed.

In the example of Fig. 9, the computer program product 910a, 910b is illustrated as an optical disc, such as a CD (compact disc) or a DVD (digital versatile disc) or a Blu-Ray disc. The computer program product 910a, 910b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 920a, 920b is here schematically shown as a track on the depicted optical disk, the computer program 920a, 920b can be stored in any way which is suitable for the computer program product 910a, 910b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for deployment of components (130a, 130b, 130c) of a distributed application (120) on destination runtime environments (200b, 200c), the method being performed by a source runtime environment (200a), the method comprising:
providing (S102), with the components (130a, 130b, 130c) residing on the source runtime environment (200a), public key fingerprints between the components (130a, 130b, 130c), such that each component (130a, 130b, 130c) has its own public key and its own private key and is provided with a public key fingerprint of at least one other of the components (130a, 130b, 130c); and
migrating (S104) each of the components (130a, 130b, 130c) from the source runtime environment (200a) to its destination runtime environment (200b, 200c) for deployment of each component (130a, 130b, 130c) on its destination runtime environment (200b, 200c).

2. The method according to claim 1, wherein the private keys, the public keys, and the public key fingerprints are generated outside the components (130a, 130b, 130c), the providing further comprising:
injecting (S102a) the private keys, the public keys, and the public key fingerprints into the components (130a, 130b, 130c).

3. The method according to claim 2, wherein the private keys, the public keys, and the public key fingerprints are generated either by the source runtime environment (200a) or outside the source runtime environment (200a) and obtained by the source runtime environment (200a).

4. The method according to claim 1, wherein the private keys, the public keys, and the public key fingerprints are generated by the components (130a, 130b, 130c), the providing further comprising:
distributing (S102b) the public key fingerprint of each of the components (130a, 130b, 130c) to at least one other of the components (130a, 130b, 130c).

5. The method according to any of the preceding claims, wherein the components (130a, 130b, 130c) are configured to communicate with each other according to at least one connection path, the at least one connection path defining a network topology.

6. The method according to claims 4 and 5, wherein the public key fingerprints are distributed in accordance with the network topology such that there are two public key fingerprints per connection path.

7. The method according to claim 6, wherein the public key fingerprints are distributed such that there is one public key fingerprint at each end of each connection path, with each public key fingerprint of the component (130a, 130b, 130c) at one end of a given connection path corresponding to the public key of the component (130a, 130b, 130c) at opposite end of the given connection path.

8. The method according to any of the preceding claims, wherein each of the public keys is signed by a trusted agent before each of the components (130a, 130b, 130c) is migrated to its destination runtime environment (200b, 200c).

9. The method according to any of the preceding claims, further comprising:
managing (S102c), with the components (130a, 130b, 130c) residing on the source runtime environment (200a), exchange of at least one of configuration information and data between the components (130a, 130b, 130c).

10. The method according to any of the preceding claims, wherein each of the components (130a, 130b, 130c) is re-migrated back to the source runtime environment (200a) for re-provisioning of the public key fingerprints before being migrated to a set of destination runtime environments (200b, 200c).

11. The method according to any of claims 1 to 9, wherein each of the components (130a, 130b, 130c) is re-migrated back to the source runtime environment (200a) for provisioning of new public key fingerprints before being migrated to a set of destination runtime environments (200b, 200c).

12. The method according to claim 10 or 11, wherein each of the components (130a, 130b, 130c) is periodically re-migrated back to the source runtime environment (200a).

13. A method for facilitating exchange of public key fingerprints between components (130a, 130b, 130c) of a distributed application (120), each component (130a, 130b, 130c) having its own public key and its own private key, the method being performed by one of the components (130a), the method comprising:
obtaining (S204a), when being in the same trusted network environment as the other components (130b, 130c), a public key fingerprint of at least one of the other components (130b, 130c) before being migrated to a destination runtime environment (200b, 200c) for deployment of the component (130a) on the destination runtime environment (200b, 200c).

14. The method according to claim 13, further comprising:
providing (S204b), when being in the same trusted network environment as the other components (130b, 130c), the public key fingerprint of the components (130a) to the at least one of the other components (130b, 130c) before being migrated to the destination runtime environment (200b, 200c).

15. The method according to claim 13 or 14, wherein the trusted network environment is a source runtime environment (200a).

16. The method according to any of claims 13 to 15, further comprising, when being deployed on the destination runtime environment (200b, 200c):
establishing (S206) a trusted connection to at least one of the other components (130b, 130c) by receiving the public key of each of the at least one of the other components (130b, 130c) and verifying the received public key to its corresponding public key fingerprint.

17. The method according to any of claims 13 to 16, wherein the private key, the public key, and the public key fingerprint are generated outside the component (130a), the method further comprising:
obtaining (S202) the private key, the public key, and the public key fingerprint from the trusted network environment.

18. The method according to any of claims 13 to 16, wherein the private key, the public key, and the public key fingerprint are generated by the component (130a), the method further comprising:
providing (S204c) at least the public key fingerprint to the trusted network environment for distribution to at least one other of the components (130b, 130c).

19. The method according to any of claims 13 to 18, wherein the component (130a) is re-migrated back to the trusted network environment for again obtaining the public key fingerprint of the at least one of the other components (130b, 130c) before being migrated back to the destination runtime environment (200b, 200c).

20. The method according to any of claims 13 to 18, wherein the component (130a) is re-migrated back to the trusted network environment for obtaining a new public key fingerprint of the at least one of the other components (130b, 130c) before being migrated back to the destination runtime environment (200b, 200c).

21. The method according to any of claims 13 to 18, wherein the component (130a) is migrated to another trusted network environment for again obtaining the public key fingerprint of the at least one of the other components (130b, 130c) before being migrated back to the destination runtime environment (200b, 200c).

22. The method according to any of claims 13 to 18, wherein the component (130a) is migrated to another trusted network environment for obtaining a new public key fingerprint of the at least one of the other components (130b, 130c) before being migrated back to the destination runtime environment (200b, 200C).

23. A runtime environment (200a) for deployment of components (130a, 130b, 130c) of a distributed application (120) on destination runtime environments (200b, 200c), the runtime environment (200a) comprising processing circuitry (210), the processing circuitry being configured to cause the runtime environment (200a) to:
provide, with the components (130a, 130b, 130c) residing on the runtime environment (200a), public key fingerprints between the components (130a, 130b, 130c), such that each component (130a, 130b, 130c) has its own public key and its own private key and is provided with a public key fingerprint of at least one other of the components (130a, 130b, 130c); and
migrate each of the components (130a, 130b, 130c) from the runtime environment (200a) to its destination runtime environment (200b, 200c) for deployment of each component (130a, 130b, 130c) on its destination runtime environment (200b, 200c).

24. A runtime environment (200a) for deployment of components (130a, 130b, 130c) of a distributed application (120) on destination runtime environments (200b, 200c), the runtime environment (200a) comprising:
a provide module (210a) configured to provide, with the components (130a, 130b, 130c) residing on the runtime environment (200a), public key fingerprints between the components (130a, 130b, 130c), such that each component (130a, 130b, 130c) has its own public key and its own private key and is provided with a public key fingerprint of at least one other of the components (130a, 130b, 130c); and
a migrate module (210e) configured to migrate each of the components (130a, 130b, 130c) from the runtime environment (200a) to its destination runtime environment (200b, 200c) for deployment of each component (130a, 130b, 130c) on its destination runtime environment (200b, 200c).

25. A system (300) for facilitating exchange of public key fingerprints between components (130a, 130b, 130c) of a distributed application (120), each component (130a, 130b, 130c) having its own public key and its own private key, the system (300) comprising processing circuitry (310), the processing circuitry being configured to cause one of the components (130a) to:
obtain, when the component (130a) is in the same trusted network environment as the other components (130b, 130c), a public key fingerprint of at least one of the other components (130b, 130c) before being migrated to a destination runtime environment (200b, 200c) for deployment of the component (130a) on the destination runtime environment (200b, 200c).

26. A system (300) for facilitating exchange of public key fingerprints between components (130a, 130b, 130c) of a distributed application (120), each component (130a, 130b, 130c) having its own public key and its own private key, the system (300) comprising:
an obtain module (310a) configured to cause one of the components (130a) to obtain, when the component (130a) is in the same trusted network environment as the other components (130b, 130c), a public key fingerprint of at least one of the other components (130b, 130c) before being migrated to a destination runtime environment (200b, 200c) for deployment of the component (130a) on the destination runtime environment (200b, 200c).

27. The system (300) according to claim 25 or 26, wherein the system (300) is part of the runtime environment (200a) of claim 23 or 24.

## Patentansprüche

1. Verfahren zur Bereitstellung von Komponenten (130a, 130b, 130c) einer verteilten Anwendung (120) in Ziel-Laufzeitumgebungen (200b, 200c), wobei das Verfahren von einer Quell-Laufzeitumgebung (200a) durchgeführt wird, und wobei das Verfahren umfasst:
Bereitstellen (S102) von Fingerabdrücken öffentlicher Schlüssel zwischen den Komponenten (130a, 130b, 130c) mit den Komponenten (130a, 130b, 130c), die sich in der Quellen-Laufzeitumgebung (200a) befinden, derart dass jede Komponente (130a, 130b, 130c) ihren eigenen öffentlichen Schlüssel und ihren eigenen privaten Schlüssel aufweist und mit einem Fingerabdruck eines öffentlichen Schlüssels mindestens einer anderen der Komponenten (130a, 130b, 130c) versehen ist; und
Migrieren (S104) jeder der Komponenten (130a, 130b,
130c) von der Quellen-Laufzeitumgebung (200a) zu ihrer Ziel-Laufzeitumgebung (200b, 200c) zur Bereitstellung jeder Komponente (130a, 130b, 130c) in ihrer Ziel-Laufzeitumgebung (200b, 200c).

2. Verfahren nach Anspruch 1, wobei die privaten Schlüssel, die öffentlichen Schlüssel und die Fingerabdrücke der öffentlichen Schlüssel außerhalb der Komponenten (130a, 130b, 130c) generiert werden, wobei das Bereitstellen ferner umfasst:
Injizieren (S102a) der privaten Schlüssel, der öffentlichen Schlüssel und der Fingerabdrücke der öffentlichen Schlüssel in die Komponenten (130a, 130b, 130c) .

3. Verfahren nach Anspruch 2, wobei die privaten Schlüssel, die öffentlichen Schlüssel und die Fingerabdrücke der öffentlichen Schlüssel entweder von der Quellen-Laufzeitumgebung (200a) oder außerhalb der Quellen-Laufzeitumgebung (200a) generiert und durch die Quellen-Laufzeitumgebung (200a) eingeholt werden.

4. Verfahren nach Anspruch 1, wobei die privaten Schlüssel, die öffentlichen Schlüssel und die Fingerabdrücke der öffentlichen Schlüssel von den Komponenten (130a, 130b, 130c) generiert werden, wobei das Bereitstellen ferner umfasst:
Verteilen (S102b) des Fingerabdrucks des öffentlichen Schlüssels jeder der Komponenten (130a, 130b, 130c) an mindestens eine andere der Komponenten (130a, 130b, 130c) .

5. Verfahren nach einem der vorhergehenden Ansprüche, wobei die Komponenten (130a, 130b, 130c) so konfiguriert sind, dass sie gemäß mindestens einem Verbindungspfad miteinander kommunizieren, wobei der mindestens eine Verbindungspfad eine Netzwerktopologie definiert.

6. Verfahren nach Anspruch 4 und 5, wobei die Fingerabdrücke der öffentlichen Schlüssel gemäß der Netzwerktopologie verteilt werden, derart dass es zwei Fingerabdrücke öffentlicher Schlüssel pro Verbindungspfad gibt.

7. Verfahren nach Anspruch 6, wobei die Fingerabdrücke der öffentlichen Schlüssel derart verteilt werden, dass es einen Fingerabdruck eines öffentlichen Schlüssels an jedem Ende jedes Verbindungspfads gibt, wobei jeder Fingerabdruck eines öffentlichen Schlüssels der Komponente (130a, 130b, 130c) an einem Ende eines gegebenen Verbindungspfads dem öffentlichen Schlüssel der Komponente (130a, 130b, 130c) am gegenüberliegenden Ende des gegebenen Verbindungspfads entspricht.

8. Verfahren nach einem der vorhergehenden Ansprüche, wobei jeder der öffentlichen Schlüssel von einem vertrauenswürdigen Agenten signiert wird, bevor jede der Komponenten (130a, 130b, 130c) zu ihrer Ziel-Laufzeitumgebung (200b, 200c) migriert wird.

9. Verfahren nach einem der vorhergehenden Ansprüche, ferner umfassend:
Verwalten (S102c) des Austauschs mindestens eines von Konfigurationsinformationen und Daten zwischen den Komponenten (130a, 130b, 130c) mit den Komponenten (130a, 130b, 130c), die sich in der Quellen-Laufzeitumgebung (200a) befinden.

10. Verfahren nach einem der vorhergehenden Ansprüche, wobei jede der Komponenten (130a, 130b, 130c) zur erneuten Bereitstellung der Fingerabdrücke der öffentlichen Schlüssel wieder zur Quellen-Laufzeitumgebung (200a) zurückmigriert wird, bevor sie zu einem Satz von Ziel-Laufzeitumgebungen (200b, 200c) migriert wird.

11. Verfahren nach einem der Ansprüche 1 bis 9, wobei jede der Komponenten (130a, 130b, 130c) zur Bereitstellung neuer Fingerabdrücke öffentlicher Schlüssel wieder zur Quellen-Laufzeitumgebung (200a) zurückmigriert wird, bevor sie zu einem Satz von Ziel-Laufzeitumgebungen (200b, 200c) migriert wird.

12. Verfahren nach Anspruch 10 oder 11, wobei jede der Komponenten (130a, 130b, 130c) periodisch wieder zur Quellen-Laufzeitumgebung (200a) zurückmigriert wird.

13. Verfahren zur Ermöglichung des Austauschs von Fingerabdrücken öffentlicher Schlüssel zwischen Komponenten (130a, 130b, 130c) einer verteilten Anwendung (120), wobei jede Komponente (130a, 130b, 130c) ihren eigenen öffentlichen Schlüssel und ihren eigenen privaten Schlüssel aufweist, wobei das Verfahren von einer der Komponenten (130a) durchgeführt wird, und wobei das Verfahren umfasst:
Einholen (S204a), wenn in der gleichen vertrauenswürdigen Netzwerkumgebung wie die anderen Komponenten (130b, 130c), eines Fingerabdrucks eines öffentlichen Schlüssels mindestens einer der anderen Komponenten (130b, 130c), bevor sie zu einer Ziel-Laufzeitumgebung (200b, 200c) zur Bereitstellen der Komponente (130a) in der Ziel-Laufzeitumgebung (200b, 200c) migriert wird.

14. Verfahren nach Anspruch 13, ferner umfassend:
Bereitstellen (S204b), wenn in der gleichen vertrauenswürdigen Netzwerkumgebung wie die anderen Komponenten (130b, 130c), des Fingerabdrucks des öffentlichen Schlüssels der Komponenten (130a) für die mindestens eine der anderen Komponenten (130b, 130c), bevor sie zur Ziel-Laufzeitumgebung (200b, 200c) migriert wird.

15. Verfahren nach Anspruch 13 oder 14, wobei die vertrauenswürdige Netzwerkumgebung eine Quellen-Laufzeitumgebung (200a) ist.

16. Verfahren nach einem der Ansprüche 13 bis 15, ferner umfassend bei Bereitstellung in der Ziel-Laufzeitumgebung (200b, 200c):
Herstellen (S206) einer vertrauenswürdigen Verbindung mit mindestens einer der anderen Komponenten (130b, 130c) durch Empfangen des öffentlichen Schlüssels jeder der mindestens einen der anderen Komponenten (130b, 130c) und Abgleichen des empfangenen öffentlichen Schlüssels mit ihrem entsprechenden Fingerabdruck des öffentlichen Schlüssels.

17. Verfahren nach einem der Ansprüche 13 bis 16, wobei der private Schlüssel, der öffentliche Schlüssel und der Fingerabdruck des öffentlichen Schlüssels außerhalb der Komponente (130a) generiert werden, wobei das Verfahren ferner umfasst:
Einholen (S202) des privaten Schlüssels, des öffentlichen Schlüssels und des Fingerabdrucks des öffentlichen Schlüssels von der vertrauenswürdigen Netzwerkumgebung.

18. Verfahren nach einem der Ansprüche 13 bis 16, wobei der private Schlüssel, der öffentliche Schlüssel und der Fingerabdruck des öffentlichen Schlüssels von der Komponente (130a) generiert werden, wobei das Verfahren ferner umfasst:
Bereitstellen (S204c) zumindest des Fingerabdrucks des öffentlichen Schlüssels für die vertrauenswürdige Netzwerkumgebung zur Verteilung an mindestens eine andere der Komponenten (130b, 130c).

19. Verfahren nach einem der Ansprüche 13 bis 18, wobei die Komponente (130a) zum erneuten Einholen des Fingerabdrucks des öffentlichen Schlüssels der mindestens einen der anderen Komponenten (130b, 130c) wieder zur vertrauenswürdigen Netzwerkumgebung zurückmigriert wird, bevor sie zur Ziel-Laufzeitumgebung (200b, 200c) zurückmigriert wird.

20. Verfahren nach einem der Ansprüche 13 bis 18, wobei die Komponente (130a) zum Einholen eines neuen Fingerabdrucks eines öffentlichen Schlüssels der mindestens einen der anderen Komponenten (130b, 130c) wieder zur vertrauenswürdigen Netzwerkumgebung zurückmigriert wird, bevor sie zur Ziel-Laufzeitumgebung (200b, 200c) zurückmigriert wird.

21. Verfahren nach einem der Ansprüche 13 bis 18, wobei die Komponente (130a) zum erneuten Einholen des Fingerabdrucks des öffentlichen Schlüssels der mindestens einen der anderen Komponenten (130b, 130c) zu einer anderen vertrauenswürdigen Netzwerkumgebung migriert wird, bevor sie zur Ziel-Laufzeitumgebung (200b, 200c) zurückmigriert wird.

22. Verfahren nach einem der Ansprüche 13 bis 18, wobei die Komponente (130a) zum Einholen eines neuen Fingerabdrucks eines öffentlichen Schlüssels der mindestens einen der anderen Komponenten (130b, 130c) zu einer anderen vertrauenswürdigen Netzwerkumgebung migriert wird, bevor sie zur Ziel-Laufzeitumgebung (200b, 200c) zurückmigriert wird.

23. Laufzeitumgebung (200a) zur Bereitstellung von Komponenten (130a, 130b, 130c) einer verteilten Anwendung (120) in Ziel-Laufzeitumgebungen (200b, 200c), wobei die Laufzeitumgebung (200a) Verarbeitungsschaltungsanordnung (210) umfasst, wobei die Verarbeitungsschaltungsanordnung so konfiguriert ist, dass sie die Laufzeitumgebung (200a) veranlasst zum:
Bereitstellen von Fingerabdrücken öffentlicher Schlüssel zwischen den Komponenten (130a, 130b, 130c) mit den Komponenten (130a, 130b, 130c), die sich in der Laufzeitumgebung (200a) befinden, derart dass jede Komponente (130a, 130b, 130c) ihren eignen öffentlichen Schlüssel und ihren eigenen privaten Schlüssel aufweist und mit einem Fingerabdruck eines öffentlichen Schlüssels mindestens einer anderen der Komponenten (130a, 130b, 130c) versehen ist; und
Migrieren jeder der Komponenten (130a, 130b, 130c) von der Laufzeitumgebung (200a) zu ihrer Ziel-Laufzeitumgebung (200b, 200c) zur Bereitstellung jeder Komponente (130a, 130b, 130c) in ihrer Ziel-Laufzeitumgebung (200b, 200c).

24. Laufzeitumgebung (200a) zur Bereitstellung von Komponenten (130a, 130b, 130c) einer verteilten Anwendung (120) in Ziel-Laufzeitumgebungen (200b, 200c), wobei die Laufzeitumgebung (200a) umfasst:
ein Bereitstellungsmodul (210a), das zum Bereitstellen von Fingerabdrücken öffentlicher Schlüssel zwischen den Komponenten (130a, 130b, 130c) mit den Komponenten (130a, 130b, 130c), die sich in der Laufzeitumgebung (200a) befinden, konfiguriert ist, derart dass jede Komponente (130a, 130b, 130c) ihren eignen öffentlichen Schlüssel und ihren eigenen privaten Schlüssel aufweist und mit einem Fingerabdruck eines öffentlichen Schlüssels mindestens einer anderen der Komponenten (130a, 130b, 130c) versehen ist; und
ein Migrationsmodul (210e), das zum Migrieren jeder der Komponenten (130a, 130b, 130c) von der Laufzeitumgebung (200a) zu ihrer Ziel-Laufzeitumgebung (200b, 200c) zur Bereitstellung jeder Komponente (130a, 130b, 130c) in ihrer Ziel-Laufzeitumgebung (200b, 200c) konfiguriert ist.

25. System (300) zum Ermöglichen des Austauschs von Fingerabdrücken öffentlicher Schlüssel zwischen Komponenten (130a, 130b, 130c) einer verteilten Anwendung (120), wobei jede Komponente (130a, 130b, 130c) ihren eigenen öffentlichen Schlüssel und ihren eigenen privaten Schlüssel aufweist, wobei das System (300) Verarbeitungsschaltungsanordnung (310) umfasst, wobei die Verarbeitungsschaltungsanordnung so konfiguriert ist, dass sie eine der Komponenten (130a) veranlasst zum:
Einholen, wenn die Komponente (130a) in der gleichen vertrauenswürdigen Netzwerkumgebung wie die anderen Komponenten (130b, 130c) ist, eines Fingerabdrucks eines öffentlichen Schlüssels mindestens einer der anderen Komponenten (130b, 130c), bevor sie zu einer Ziel-Laufzeitumgebung (200b, 200c) zur Bereitstellung der Komponente (130a) in der Ziel-Laufzeitumgebung (200b, 200c) migriert wird.

26. System (300) zum Ermöglichen des Austauschs von Fingerabdrücken öffentlicher Schlüssel zwischen Komponenten (130a, 130b, 130c) einer verteilten Anwendung (120), wobei jede Komponente (130a, 130b, 130c) ihren eigenen öffentlichen Schlüssel und ihren eigenen privaten Schlüssel aufweist, wobei das System (300) umfasst:
ein Einholmodul (310a), das so konfiguriert ist, dass es eine der Komponenten (130a), wenn die Komponente (130a) in der gleichen vertrauenswürdigen Netzwerkumgebung wie die anderen Komponenten (130b, 130c) ist, zum Einholen eines Fingerabdrucks eines öffentlichen Schlüssels mindestens einer der anderen Komponenten (130b, 130c) veranlasst, bevor sie zu einer Ziel-Laufzeitumgebung (200b, 200c) zur Bereitstellung der Komponente (130a) in der Ziel-Laufzeitumgebung (200b, 200c) migriert wird.

27. System (300) nach Anspruch 25 oder 26, wobei das System (300) Teil der Laufzeitumgebung (200a) nach Anspruch 23 oder 24 ist.

## Revendications

1. Procédé de déploiement de composants (130a, 130b, 130c) d'une application distribuée (120) dans des environnements d'exécution de destination (200b, 200c), le procédé étant réalisé par un environnement d'exécution de source (200a), le procédé comprenant :
la fourniture (S102), avec les composants (130a, 130b, 130c) résidant dans l'environnement d'exécution de source (200a), d'empreintes digitales de clés publiques entre les composants (130a, 130b, 130c), de sorte que chaque composant (130a, 130b, 130c) ait sa propre clé publique et sa propre clé privée et soit muni d'une empreinte digitale de clé publique d'au moins un autre des composants (130a, 130b, 130c) ; et
la migration (S104) de chacun des composants (130a, 130b, 130c) de l'environnement d'exécution de source (200a) à son environnement d'exécution de destination (200b, 200c) pour un déploiement de chaque composant (130a, 130b, 130c) dans son environnement d'exécution de destination (200b, 200c).

2. Procédé selon la revendication 1, dans lequel les clés privées, les clés publiques et les empreintes digitales de clés publiques sont générées à l'extérieur des composants (130a, 130b, 130c), la fourniture comprenant en outre :
l'injection (S102a) des clés privées, des clés publiques et des empreintes digitales de clés publiques dans les composants (130a, 130b, 130c).

3. Procédé selon la revendication 2, dans lequel les clés privées, les clés publiques et les empreintes digitales de clés publiques sont générées soit par l'environnement d'exécution de source (200a) soit à l'extérieur de l'environnement d'exécution de source (200a) et obtenues par l'environnement d'exécution de source (200a).

4. Procédé selon la revendication 1, dans lequel les clés privées, les clés publiques et les empreintes digitales de clés publiques sont générées par les composants (130a, 130b, 130c), la fourniture comprenant en outre :
la distribution (S102b) de l'empreinte digitale de clé publique de chacun des composants (130a, 130b, 130c) à au moins un autre des composants (130a, 130b, 130c).

5. Procédé selon l'une quelconque des revendications précédentes, dans lequel les composants (130a, 130b, 130c) sont configurés pour communiquer les uns avec les autres selon au moins un trajet de connexion, l'au moins un trajet de connexion définissant une topologie de réseau.

6. Procédé selon les revendications 4 et 5, dans lequel les empreintes digitales de clés publiques sont distribuées selon la topologie de réseau de sorte qu'il y ait deux empreintes digitales de clés publiques par trajet de connexion.

7. Procédé selon la revendication 6, dans lequel les empreintes digitales de clés publiques sont distribuées de sorte qu'il y ait une empreinte digitale de clé publique à chaque extrémité de chaque trajet de connexion, avec chaque empreinte digitale de clé publique du composant (130a, 130b, 130c) à une extrémité d'un trajet de connexion donné correspondant à la clé publique du composant (130a, 130b, 130c) à une extrémité opposée du trajet de connexion donné.

8. Procédé selon l'une quelconque des revendications précédentes, dans lequel chacune des clés publiques est signée par un agent de confiance avant la migration de chacun des composants (130a, 130b, 130c) à son environnement d'exécution de destination (200b, 200c).

9. Procédé selon l'une quelconque des revendications précédentes, comprenant en outre :
la gestion (S102c), avec les composants (130a, 130b, 130c) résidant dans l'environnement d'exécution de source (200a), d'un échange d'au moins l'une parmi des informations de configuration et des données entre les composants (130a, 130b, 130c).

10. Procédé selon l'une quelconque des revendications précédentes, dans lequel chacun des composants (130a, 130b, 130c) est remigré de retour à l'environnement d'exécution de source (200a) pour la fourniture à nouveau des empreintes digitales de clés publiques avant sa migration à un ensemble d'environnements d'exécution de destination (200b, 200c).

11. Procédé selon l'une quelconque des revendications 1 à 9, dans lequel chacun des composants (130a, 130b, 130c) est remigré de retour à l'environnement d'exécution de source (200a) pour la fourniture de nouvelles empreintes digitales de clés publiques avant sa migration à un ensemble d'environnements d'exécution de destination (200b, 200c).

12. Procédé selon la revendication 10 ou 11, dans lequel chacun des composants (130a, 130b, 130c) est périodiquement remigré de retour à l'environnement d'exécution de source (200a).

13. Procédé de facilitation d'échange d'empreintes digitales de clés publiques entre des composants (130a, 130b, 130c) d'une application distribuée (120), chaque composant (130a, 130b, 130c) ayant sa propre clé publique et sa propre clé privée, le procédé étant réalisé par l'un des composants (130a), le procédé comprenant :
l'obtention (S204a), lorsqu'il se trouve dans le même environnement de réseau de confiance que les autres composants (130b, 130c), d'une empreinte digitale de clé publique d'au moins l'un des autres composants (130b, 130c) avant sa migration à un environnement d'exécution de destination (200b, 200c) pour un déploiement du composant (130a) dans l'environnement d'exécution de destination (200b, 200c).

14. Procédé selon la revendication 13, comprenant en outre :
la fourniture (S204b), lorsqu'il se trouve dans le même environnement de réseau de confiance que les autres composants (130b, 130c), de l'empreinte digitale de clé publique des composants (130a) à l'au moins un des autres composants (130b, 130c) avant sa migration à l'environnement d'exécution de destination (200b, 200c) .

15. Procédé selon la revendication 13 ou 14, dans lequel l'environnement de réseau de confiance est un environnement d'exécution de source (200a).

16. Procédé selon l'une quelconque des revendications 13 à 15, comprenant en outre, lorsqu'il est déployé dans l'environnement d'exécution de destination (200b, 200c) :
l'établissement (S206) d'une connexion de confiance à au moins l'un des autres composants (130b, 130c) par la réception de la clé publique de chacun de l'au moins un des autres composants (130b, 130c) et la vérification de la clé publique reçue par rapport à son empreinte digitale de clé publique correspondante.

17. Procédé selon l'une quelconque des revendications 13 à 16, dans lequel la clé privée, la clé publique et l'empreinte digitale de clé publique sont générées à l'extérieur du composant (130a), le procédé comprenant en outre :
l'obtention (S202) de la clé privée, la clé publique et l'empreinte digitale de clé publique depuis l'environnement de réseau de confiance.

18. Procédé selon l'une quelconque des revendications 13 à 16, dans lequel la clé privée, la clé publique et l'empreinte digitale de clé publique sont générées par le composant (130a), le procédé comprenant en outre :
la fourniture (S204c) d'au moins l'empreinte digitale de clé publique à l'environnement de réseau de confiance pour sa distribution à au moins un autre des composants (130b, 130c).

19. Procédé selon l'une quelconque des revendications 13 à 18, dans lequel le composant (130a) est remigré de retour à l'environnement de réseau de confiance pour obtenir à nouveau l'empreinte digitale de clé publique de l'au moins un des autres composants (130b, 130c) avant sa migration de retour à l'environnement d'exécution de destination (200b, 200c).

20. Procédé selon l'une quelconque des revendications 13 à 18, dans lequel le composant (130a) est remigré de retour à l'environnement de réseau de confiance pour obtenir une nouvelle empreinte digitale de clé publique de l'au moins un des autres composants (130b, 130c) avant sa migration de retour à l'environnement d'exécution de destination (200b, 200c).

21. Procédé selon l'une quelconque des revendications 13 à 18, dans lequel le composant (130a) est migré à un autre environnement de réseau de confiance pour obtenir à nouveau l'empreinte digitale de clé publique de l'au moins un des autres composants (130b, 130c) avant sa migration de retour à l'environnement d'exécution de destination (200b, 200c).

22. Procédé selon l'une quelconque des revendications 13 à 18, dans lequel le composant (130a) est migré à un autre environnement de réseau de confiance pour obtenir une nouvelle empreinte digitale de clé publique de l'au moins un des autres composants (130b, 130c) avant sa migration de retour à l'environnement d'exécution de destination (200b, 200c).

23. Environnement d'exécution (200a) de déploiement de composants (130a, 130b, 130c) d'une application distribuée (120) dans des environnements d'exécution de destination (200b, 200c), l'environnement d'exécution (200a) comprenant une circuiterie de traitement (210), la circuiterie de traitement étant configurée pour amener l'environnement d'exécution (200a) à :
fournir, avec les composants (130a, 130b, 130c) résidant dans l'environnement d'exécution (200a), des empreintes digitales de clés publiques entre les composants (130a, 130b, 130c), de sorte que chaque composant (130a, 130b, 130c) ait sa propre clé publique et sa propre clé privée et soit muni d'une empreinte digitale de clé publique d'au moins un autre des composants (130a, 130b, 130c) ; et
migrer chacun des composants (130a, 130b, 130c) de l'environnement d'exécution (200a) à son environnement d'exécution de destination (200b, 200c) pour un déploiement de chaque composant (130a, 130b, 130c) dans son environnement d'exécution de destination (200b, 200c) .

24. Environnement d'exécution (200a) de déploiement de composants (130a, 130b, 130c) d'une application distribuée (120) dans des environnements d'exécution de destination (200b, 200c), l'environnement d'exécution (200a) comprenant :
un module de fourniture (210a) configuré pour fournir, avec les composants (130a, 130b, 130c) résidant dans l'environnement d'exécution (200a), des empreintes digitales de clés publiques entre les composants (130a, 130b, 130c), de sorte que chaque composant (130a, 130b, 130c) ait sa propre clé publique et sa propre clé privée et soit muni d'une empreinte digitale de clé publique d'au moins un autre des composants (130a, 130b, 130c) ; et
un module de migration (210e) configuré pour migrer chacun des composants (130a, 130b, 130c) de l'environnement d'exécution (200a) à son environnement d'exécution de destination (200b, 200c) pour un déploiement de chaque composant (130a, 130b, 130c) dans son environnement d'exécution de destination (200b, 200c) .

25. Système (300) de facilitation d'échange d'empreintes digitales de clés publiques entre des composants (130a, 130b, 130c) d'une application distribuée (120), chaque composant (130a, 130b, 130c) ayant sa propre clé publique et sa propre clé privée, le système (300) comprenant une circuiterie de traitement (310), la circuiterie de traitement étant configurée pour amener l'un des composants (130a) à :
obtenir, lorsque le composant (130a) se trouve dans le même environnement de réseau de confiance que les autres composants (130b, 130c), une empreinte digitale de clé publique d'au moins l'un des autres composants (130b, 130c) avant sa migration à un environnement d'exécution de destination (200b, 200c) pour un déploiement du composant (130a) dans l'environnement d'exécution de destination (200b, 200c).

26. Système (300) de facilitation d'échange d'empreintes digitales de clés publiques entre des composants (130a, 130b, 130c) d'une application distribuée (120), chaque composant (130a, 130b, 130c) ayant sa propre clé publique et sa propre clé privée, le système (300) comprenant :
un module d'obtention (310a) configuré pour amener l'un des composants (130a) à obtenir, lorsque le composant (130a) se trouve dans le même environnement de réseau de confiance que les autres composants (130b, 130c), une empreinte digitale de clé publique d'au moins l'un des autres composants (130b, 130c) avant sa migration à un environnement d'exécution de destination (200b, 200c) pour un déploiement du composant (130a) dans l'environnement d'exécution de destination (200b, 200c) .

27. Système (300) selon la revendication 25 ou 26, dans lequel le système (300) fait partie de l'environnement d'exécution (200a) selon la revendication 23 ou 24.
